# EUROPEAN PATENT APPLICATION

(11) **EP 4 349 931 A1**
(43) Date of publication of application: **10.04.2024**
(21) Application number: 22815804.4
(22) Date of filing: 11.05.2022
(51) Int. Cl.: C09J 105/00, C08F 8/14, C08F 251/00, C09J 4/00, C09J 4/02, C09J 7/38, C09J 11/06

(54) **PRESSURE-SENSITIVE ADHESIVE COMPOSITION AND PRESSURE-SENSITIVE ADHESIVE TAPE**

(30) Priority: 01.06.2021 JP 2021092282
(71) Applicant: Nitto Denko Corporation, Ibaraki-shi Osaka 567-8680 (JP)
(72) Inventor: KUMADA, Tatsuya, Ibaraki-shi, Osaka 567-8680 (JP); OGINO, Yoshiko, Ibaraki-shi, Osaka 567-8680 (JP); HARA, Yusuke, Ibaraki-shi, Osaka 567-8680 (JP); NAITO, Tomonari, Ibaraki-shi, Osaka 567-8680 (JP)
(74) Representative: Müller-Boré & Partner Patentanwälte PartG mbB
(86) International application number: PCT/JP2022/019917
(87) International publication number: WO 2022/255049

(57) **Abstract**

A pressure-sensitive adhesive composition includes a β-1,3-glucan derivative obtained by introducing an acyl group into a β-1,3-glucan, the β-1,3-glucan derivative having a degree of substitution of the acyl group of 2.6 or more and less than 3.0, and a compound having both of a (meth)acryloyl group and a hydroxyl-group-reactive functional group, and/or a reaction product of the β-1,3-glucan derivative and the compound having both of a (meth)acryloyl group and a hydroxyl-group-reactive functional group; and a photo-radical generator.

## Description

### TECHNICAL FIELD

The present invention relates to a pressure-sensitive adhesive composition and a pressure-sensitive adhesive tape.

### BACKGROUND ART

A pressure-sensitive adhesive composition containing a β-1,3-glucan derivative obtained by introducing an acyl group into a β-1,3-glucan has been known (for example, see Patent document 1 below). The pressure-sensitive adhesive described in Patent document 1 includes a β-1,3-glucan derivative of which acyl group has a degree of substitution of 1.0 or more and 3.0 or less.

### Citation List

### Patent Document

Patent Document 1 Japanese Unexamined Patent Publication No. 2018-154723

### SUMMARY OF THE INVENTION

### PROBLEM TO BE SOLVED BY THE INVENTION

Recently, a higher level of adhesion has been required. However, the pressure-sensitive adhesive composition described in Patent document 1 is disadvantageous in that it does not meet the above-described requirement.

Further, such a pressure-sensitive adhesive composition is required to have a high holding force under high-temperature atmosphere. When a pressure-sensitive adhesive composition has a high holding force under high-temperature atmosphere, the sliding distance of an adherend is short after a predetermined period of time has passed since the adhering of the adherend under high-temperature atmosphere. The pressure-sensitive adhesive composition described in Patent document 1 is disadvantageous in that it does not meet the above-described requirement.

The present invention provides a pressure-sensitive adhesive composition and a pressure-sensitive adhesive tape, both of which have high adhesion and also have a high holding force under high-temperature atmosphere.

### MEANS FOR SOLVING THE PROBLEM

The present invention [1] includes a pressure-sensitive adhesive composition including: a β-1,3-glucan derivative obtained by introducing an acyl group into a β-1,3-glucan, the β-1,3-glucan derivative having a degree of substitution of the acyl group of 2.6 or more and less than 3.0, and a compound having both of a (meth)acryloyl group and a hydroxyl-group-reactive functional group, and/or a reaction product of the β-1,3-glucan derivative and the compound having both of a (meth)acryloyl group and a hydroxyl-group-reactive functional group; and a photo-radical generator.

The present invention [2] includes the pressure-sensitive adhesive composition described in the above-described [1], wherein the hydroxyl-group-reactive functional group of the compound is an isocyanate group.

The present invention [3] includes the pressure-sensitive adhesive composition described in the above-described [1] or [2], wherein the compound is isocyanatoalkyl (meth)acrylate.

The present invention [4] includes the pressure-sensitive adhesive composition described in the above-described [1] to [3], wherein the content ratio of the compound to 100 parts by weight of the β-1,3-glucan derivative is 1 part by weight or more and 20 parts by weight or less.

The present invention [5] includes the pressure-sensitive adhesive composition described in the above-described [1] to [4], further including: a radically polymerizable monomer.

The present invention [6] includes the pressure-sensitive adhesive composition described in the above-described [5], wherein the radically polymerizable monomer has a carboxyl group.

The present invention [7] includes the pressure-sensitive adhesive composition described in the above-described [5] or [6], wherein the radically polymerizable monomer is a (meth)acrylic acid ester in which a remaining group bonding with the (meth)acryloyl group has repeating units.

The present invention [8] includes the pressure-sensitive adhesive composition described in the above-described [5] to [7], wherein the content ratio of the radically polymerizable monomer to 100 parts by weight of the β-1,3-glucan derivative is 0.01 parts by weight or more and 10 parts by weight or less.

The present invention [9] includes the pressure-sensitive adhesive composition described in the above-described [1] to [8], wherein the photo-radical generator is a benzyl ketal-based compound.

The present invention [10] includes the pressure-sensitive adhesive composition described in the above-described [1] to [9], wherein the content ratio of the photo-radical generator to 100 parts by weight of the β-1,3-glucan derivative is 0.01 parts by weight or more and 5 parts by weight or less.

The present invention [11] includes a pressure-sensitive adhesive tape including: a pressure-sensitive adhesive layer made of a pressure-sensitive adhesive composition described in any one of the above-described [1] to [10].

### EFFECTS OF THE INVENTION

A β-1,3-glucan derivative and a compound containing both of a (meth)acryloyl group and a hydroxyl-group-reactive functional group are allowed to react with each other by heat. On the other hand, the thermal reaction of the (meth)acryloyl group of their reaction product is suppressed. Thus, in the pressure-sensitive adhesive composition of the present invention, while the cross-linkage that is promoted by heat in the reaction product is suppressed, the reaction product is enabled to cross-link by light irradiation at an arbitrary time.

As a result, in the pressure-sensitive adhesive composition of the present invention, while gelatinization by heat is suppressed, a cross-linkage can be formed at an arbitrary time. This increases the adhesion and achieves an excellent holding force under high-temperature atmosphere.

### BRIEF DESCRIPTION OF THE DRAWINGS

FIG. 1 is a cross-sectional view of one embodiment of the pressure-sensitive adhesive tape of the present invention.
FIG. 2 is a cross-sectional view of another embodiment of the pressure-sensitive adhesive tape.
FIG. 3 is a cross-sectional view of another embodiment of the pressure-sensitive adhesive tape.
FIG. 4 is a schematic view of the measurement of the holding force in Example.

### DESCRIPTION OF THE EMBODIMENTS

### [Pressure-sensitive Adhesive Composition]

The pressure-sensitive adhesive composition of the present invention contains a β-1,3-glucan derivative, and a compound containing both of a (meth)acryloyl group and a hydroxyl-group-reactive functional group, and/or a reaction product of the β-1,3-glucan derivative and the compound having both of a (meth)acryloyl group and a hydroxyl-group-reactive functional group, and a photo-radical generator.

### [β-1,3-glucan Derivative]

The β-1,3-glucan derivative is a base polymer in the pressure-sensitive adhesive composition. The β-1,3-glucan derivative is a partially-acylated compound obtained by acylating a part of the hydroxy group in the glucose contained in a β-1,3-glucan with an acyl group. In other words, the β-1,3-glucan derivative is an acyl compound obtained by introducing an acyl group into a β-1,3-glucan.

The acyl group is shown as RCO-. Examples of R include a hydrocarbon group. Examples of the hydrocarbon group include an aliphatic hydrocarbon group, an alicyclic hydrocarbon group, and an aromatic hydrocarbon group. An aliphatic hydrocarbon group is preferably used.

Examples of the aliphatic hydrocarbon group include a saturated aliphatic hydrocarbon group and an unsaturated aliphatic hydrocarbon group. Examples of the saturated aliphatic hydrocarbon group include an alkyl group.

Examples of the alkyl group include a straight-chain alkyl group and a branched alkyl group. A straight-chain alkyl group is preferably used. The alkyl group has carbon atoms of, for example, 3 or more, and, for example, 18 or less. Examples of the straight-chain alkyl group include propyl, butyl, pentyl, hexyl, heptyl, octyl, nonyl, decyl, undecyl, dodecyl, tridecyl, tetradecyl, pentadecyl, hexadecyl, heptadecyl, and octadecyl. Examples of the branched alkyl group include ethylhexyl.

Examples of the unsaturated aliphatic hydrocarbon group include an alkenyl group. The alkenyl group has carbon atoms of, for example, 3 or more and 18 or less. Examples of the alkenyl group include heptadecenyl.

The hydrocarbon group (R in RCO-) has carbon atoms of preferably 7 or more, more preferably 9 or more, even more preferably 11 or more, and preferably 15 or less. When the number of carbon atoms of the hydrocarbon group is the above-described lower limit or more and the upper limit or less, the adhesion sufficiently improves.

Specific examples of the acyl group include butanoyl (an example when R in RCO is C₃H₇), pentanoyl (an example when R in RCO is C₄H₉), hexanoyl (an example when R in RCO is C₅H₁₁), heptanoyl (an example when R in RCO is C₆H₁₃), octanoyl (an example when R in RCO is C₇H₁₅), nonanoyl (an example when R in RCO is C₈H₁₇), decanoyl (an example when R in RCO is C₉H₁₉), lauroyl (i.e., dodecanoyl) (when R in RCO is C₁₁H₂₃), myristoyl (i.e., tetradecanoyl) (an example when R in RCO is C₁₃H₂₇), palmitoyl (i.e., hexadecanoyl) (an example when R in RCO is C₁₅H₃₁), stearoyl (i.e., octadecanoyl) (an example when R in RCO is C₁₇H₃₅), oleoyl (an example when R in RCO is C₁₇H₃₃) and nonadecanoyl (an example when R in RCO is C₁₈H₃₇). Octanoyl, nonanoyl, decanoyl, lauroyl, myristoyl, and palmitoyl are preferably used.

In the present invention, the lower limit of the degree of substitution of the acyl group in the β-1,3-glucan derivative is 2.6. When the degree of substitution of the acyl group is less than 2.6, an excessive amount of the hydroxyl group remains in the β-1,3-glucan derivative. In other words, the interaction between the molecular chains of the β-1,3-glucan derivative becomes too strong. Thus, the pressure-sensitive adhesive composition becomes hard. As a result, the adhesion of the pressure-sensitive adhesive composition decreases.

The degree of substitution of the acyl group may be referred to as DS. The degree of substitution of the acyl group in the β-1,3-glucan derivative is the average number of replacements of the hydroxyl group with an acyl group (introductions of an acyl group to the hydroxyl group) among the three hydroxyl groups in a unit of 0-1,3-glucan. Thus, theoretically, the upper limit of the degree of substitution of the acyl group in the β-1,3-glucan derivative is 3.0.

In the present invention, the degree of substitution of the acyl group in the β-1,3-glucan derivative is less than 3.0. When the degree of substitution of the acyl group in the β-1,3-glucan derivative is 3.0, the hydroxyl groups do not remain in the β-1,3-glucan derivative. Thus, there is no cross-linkage point in the β-1,3-glucan derivative. And the compound having both of the (meth)acryloyl group and the hydroxyl-group-reactive functional group is not allowed to react. Thus, even if light irradiation is carried out thereafter, no cross-linkage occurs. Therefore, the holding force of the pressure-sensitive adhesive composition decreases.

The degree of substitution of the acyl group in the β-1,3-glucan derivative is preferably 2.7 or more, 2.8 or more, and also, for example, 2.9 or less, preferably 2.8 or less.

The type, physical properties, and production method of the β-1,3-glucan derivative are described, for example, in Japanese Unexamined Patent Publication No. 2018-154723. The degree of substitution of the acyl group in the β-1,3-glucan derivative is determined with ¹H-NMR. The measurement with ¹H-NMR is described, for example, in Japanese Unexamined Patent Publication No. 2015-124183 and WO2014-077340.

The ratio of the β-1,3-glucan derivative in the pressure-sensitive adhesive composition is, for example, 80% by weight or more, and, for example, 99.99% by weight or less.

### [Compound Having Both of (Meth)acryloyl Group and Hydroxyl-group-reactive Functional Group]

The compound having both of a (meth)acryloyl group and a hydroxyl-group-reactive functional group is a compound having both a (meth)acryloyl group and a hydroxyl group functional group in one molecule. The compound having both of a (meth)acryloyl group and a hydroxyl-group-reactive functional group may be abbreviated as a functional group-containing acryl compound.

The (meth)acryloyl group means an acryloyl group and/or a methacryloyl group. The functional group-containing acryl compound may have one or two or more (meth)acryloyl group(s) per one molecule, and preferably has one (meth)acryloyl group per one molecule.

The hydroxyl-group-reactive functional group means a functional group capable of reacting with the hydroxyl group of the β-1,3-glucan derivative. The functional group-containing acryl compound may have one or two or more hydroxyl-group-reactive functional group(s) per one molecule, and preferably has one hydroxyl-group-reactive functional group.

Examples of the hydroxyl-group-reactive functional group include isocyanate, epoxy, alkoxysilyl, acid anhydride, and carboxylic acid chloride. In terms of facilitating the reaction with a hydroxyl group, isocyanate is preferably used.

Examples of the functional group-containing acryl compound include an isocyanate-containing acryl compound, an epoxy-containing acryl compound, an alkoxysilyl-containing acryl compound, an acid anhydride-containing acryl compound, and a carboxylic acid chloride-containing acryl compound.

These functional group-containing acryl compounds may be used alone or in a combination of two or more.

An isocyanate-containing acryl compound and an epoxy-containing acryl compound (for example, glycidyl (meth)acrylate) are preferably used. In terms of facilitating the reaction with a hydroxyl group, an isocyanate-containing acryl compound is preferably used.

Examples of the isocyanate-containing acryl compound include isocyanatoalkyl (meth)acrylate and (meth)acryloyl (poly) oxyalkylene alkyl isocyanate. These isocyanate-containing acryl compounds may be used alone or in a combination of two or more.

Examples of the isocyanatoalkyl (meth)acrylate include isocyanatoalkyl (meth)acrylate having alkyl group of 1 to 4 carbon atom(s). Specifically, examples thereof include isocyanatomethyl (meth)acrylate, isocyanatoethyl (meth)acrylate, isocyanatopropyl (meth)acrylate, and isocyanatobutyl (meth)acrylate.

Examples of the (meth)acryloyl (poly)oxyalkylene alkyl isocyanate include (meth)acryloylpolyoxyethylene ethyl isocyanate and (meth)acryloyloxyethyloxyethylisocyanate.

As the isocyanate-containing acryl compound, isocyanatoalkyl (meth)acrylate is preferably used. Isocyanatoethyl (meth)acrylate is more preferably used. 2-isocyanatoethylacrylate is even more preferably used.

As such an isocyanate-containing acryl compound, a commercially available product may be used. Example the product include Karenz AOI (manufactured by Showa Denko K. K., 2-isocyanatoethylacrylate), Karenz MOI (manufactured by Showa Denko K. K., 2-isocyanatoethyl methacrylate), and Karenz MOI-EG (manufactured by Showa Denko K. K., 2-(2-methacryloyloxyethyloxy)ethylisocyanate). Karenz AOI (manufactured by Showa Denko K. K., 2-isocyanatoethylacrylate) is preferably used.

Relative to 100 parts by weight of the β-1,3-glucan derivative, the functional group-containing acryl compound is, for example, 1 part by weight or more, preferably 3 parts by weight or more, more preferably 5 parts by weight or more. When the part by weight of the functional group-containing acryl compound relative to 100 parts by weight of the β-1,3-glucan derivative is the above-described lower limit or more, the holding force of the pressure-sensitive adhesive composition further more increases.

Relative to 100 parts by weight of the β-1,3-glucan derivative, the functional group-containing acryl compound is, for example, 50 parts by weight or less, preferably 25 parts by weight or less, more preferably 15 parts by weight or less, even more preferably 10 parts by weight or less. When the part by weight of the functional group-containing acryl compound relative to 100 parts by weight of the β-1,3-glucan derivative is the above-described upper limit or less, the holding force of the pressure-sensitive adhesive composition further more increases.

The functional group-containing acryl compound is preferably blended in an amount in which an equivalent ratio (hydroxyl-group-reactive functional group/hydroxyl group) is in excess of 1 and 3 or less so that the hydroxyl-group-reactive functional group of the functional group-containing acryl compound exceeds the hydroxyl group of the β-1,3-glucan derivative.

### [Photo-radical Generator]

The photo-radical generator is a compound that generates radical as an active species by light (for example, radiation (gamma rays, X rays, etc.), ultraviolet rays, visible light) irradiation. The photo-radical generator is not especially limited and is selected depending on the wavelength of the light used for the irradiation.

The photo-radical generator is a compound that generates radical by the bond cleavage and/or hydrogen abstraction by light irradiation. Examples of the photo-radical generator include a benzyl ketal-based compound, an α-hydroxyketone-based photopolymerization initiator, an α-amino ketone-based photopolymerization initiator, an acyl phosphineoxide-based photopolymerization initiator, an oximeester-based photopolymerization initiator, an acridine-based photopolymerization initiator, a titanocene-based photopolymerization initiator, a benzophenone-based photopolymerization initiator, an acetophenone-based photopolymerization initiator, an aromatic ketoester-based photopolymerization initiator, and a benzoic acid ester-based photopolymerization initiator.

The above-described photo-radical generators are used alone or in a combination of two or more.

As the photo-radical generator, a benzyl ketal-based compound is preferably used.

As the photo-radical generator, a commercially available product may be used. Examples of the product include Omnirad 184, 369, 500, 651, 819, 907, 784, 2959 (all of which are manufactured by IGM Resins B.V.), CGI-1700, -1750, -1850, CG 24-61, Darocur 1116 and 1173 (all of which are manufactured by BASF).

As the photo-radical generator, Omnirad 651 that is a benzyl ketal-based compound is preferably used.

Relative to 100 parts by weight of the β-1,3-glucan derivative, the photo-radical generator is, for example, 0.01 parts by weight or more, preferably 0.05 parts by weight or more, more preferably 0.075 parts by weight or more, even more preferably 0.1 parts by weight or more. When the part by weight of the photo-radical generator relative to 100 parts by weight of the β-1,3-glucan derivative is the above-described lower limit or more, the pressure-sensitive adhesive composition can have an even higher holding force.

Relative to 100 parts by weight of the β-1,3-glucan derivative, the photo-radical generator is, for example, 5 parts by weight or less, preferably 1 part by weight or less, more preferably 0.5 parts by weight or less, even more preferably 0.2 parts by weight or less. When the parts by weight of the photo-radical generator relative to 100 parts by weight of the β-1,3-glucan derivative is the above-described upper limit or less, the pressure-sensitive adhesive composition can have an even higher holding force.

### [Preparation of Pressure-sensitive Composition]

By mixing the above-described β-1,3-glucan derivative, functional group-containing acryl compound, and photo-radical generator in the above-described blending ratio, the pressure-sensitive adhesive composition of the present invention is obtained. In other words, the pressure-sensitive adhesive composition of the present invention contains the β-1,3-glucan derivative, the functional group-containing acryl compound, and the photo-radical generator .

When a subsequent heating allows the β-1,3-glucan derivative and the functional group-containing acryl compound to react with each other and the pressure-sensitive adhesive composition of the present invention contains a reaction product of the derivative and the compound, the pressure-sensitive adhesive composition of the present invention contains the reaction product of the β-1,3-glucan derivative and the functional group-containing acryl compound and a photo-radical generator. In other words, the pressure-sensitive adhesive composition of the present invention contains a β-1,3-glucan derivative, and a functional group-containing acryl compound, and/or a reaction product thereof, and a photo-radical generator. When the pressure-sensitive adhesive composition contains a reaction product of the β-1,3-glucan derivative and the functional group-containing acryl compound and a photo-radical generator, and the β-1,3-glucan derivative and/or the functional group-containing acryl compound remain in the composition; the pressure-sensitive adhesive composition of the present invention contains the β-1,3-glucan derivative and/or the functional group-containing acryl compound (at least one of the β-1,3-glucan derivative and the functional group-containing acryl compound), the reaction product thereof, and the photo-radical generator.

### [Radically Polymerizable Monomer]

The present invention may further include a radically polymerizable monomer that is copolymerizable with the functional group-containing acryl compound. In such a case, the pressure-sensitive adhesive composition of the present invention contains a β-1,3-glucan derivative, a functional group-containing acryl compound, a photo-radical generator, and a radically polymerizable monomer. Alternatively, when a subsequent heating allows the β-1,3-glucan derivative to react with the functional group-containing acryl compound, and the pressure-sensitive adhesive composition of the present invention contains a reaction product thereof; the pressure-sensitive adhesive composition of the present invention contains the reaction product of the β-1,3-glucan derivative and the functional group-containing acryl compound, the photo-radical generator, and the radically polymerizable monomer. In other words, the pressure-sensitive adhesive composition of the present invention includes a β-1,3-glucan derivative, and a functional group-containing acryl compound, and/or a reaction product thereof, and a photo-radical generator, and further includes a radically polymerizable monomer. The pressure-sensitive composition of the present invention preferably includes a β-1,3-glucan derivative, and a functional group-containing acryl compound, and/or a reaction product of the β-1,3-glucan derivative and the functional group-containing acryl compound, and a photo-radical generator, and a radically polymerizable monomer. When the pressure-sensitive adhesive composition includes the reaction product of the β-1,3-glucan derivative and the functional group-containing acryl compound, the photo-radical generator, and the radically polymerizable monomer, and the β-1,3-glucan derivative and/or the functional group-containing acryl compound remain; the pressure-sensitive adhesive composition of the present invention includes the β-1,3-glucan derivative and/or the functional group-containing acryl compound (at least one of the β-1,3-glucan derivative and the functional group-containing acryl compound), the photo-radical generator, the reaction product of the β-1,3-glucan derivative and the functional group-containing acryl compound, and the radically polymerizable monomer.

The radically polymerizable monomer is a monomer that has a radically polymerizable unsaturated double bond, and examples thereof include (meth)acryls, (meth)acrylamides, aromatic vinyls, vinyl esters, and acrylonitrils. (Meth)acryls are preferably used. (Meth)acryl means acryl and/or methacryl.

Examples of (meth)acryls include a (meth)acrylic monomer and a (meth)acrylic oligomer.

The (meth)acrylic monomer is (meth)acryls in which the remaining group bonding with the (meth)acryloyl group does not have repeating units, and examples thereof include a functional group-free (meth)acrylic monomer and a functional group-containing (meth)acrylic monomer.

The functional group-free (meth)acrylic monomer is a (meth)acrylic monomer that does not have a functional group, and examples thereof include a (meth)acrylic acid alkyl ester.

Examples of the (meth)acrylic acid alkyl ester include a (meth)acrylic acid alkyl ester having a straight chain or branched aliphatic alkyl group or an alicyclic alkyl group. Specifically, examples thereof include methyl (meth)acrylate, ethyl (meth)acrylate, butyl (meth)acrylate, 2-ethylhexyl (meth)acrylate, nonyl (meth)acrylate, lauryl (meth)acrylate, cyclohexyl (meth)acrylate, and isobomyl (meth)acrylate.

The functional group-containing (meth)acrylic monomer is a (meth)acrylic monomer having a functional group other than the above-described hydroxyl-group-reactive functional group, and examples thereof include a carboxyl group-containing (meth)acrylic monomer and a hydroxy group-containing (meth)acrylic monomer.

Examples of the carboxyl group-containing (meth)acrylic monomer include (meth)acrylic acid. Examples of the hydroxy group-containing (meth)acrylic monomer include a hydroxy group-containing (meth)acrylic acid ester. Examples of the hydroxy group-containing (meth)acrylic acid ester include 2-hydroxyethyl (meth)acrylate, 3-hydroxypropyl (meth)acrylate, and 4-hydroxybutyl (meth)acrylate.

As the functional group-containing (meth)acrylic monomer, a hydroxy group-containing (meth)acrylic acid ester is preferably used, and 4-hydroxybutyl (meth)acrylate is more preferably used.

A (meth)acrylic oligomer is (meth)acryls in which the remaining group bonding with the (meth)acryloyl group has repeating units (a (meth)acrylic acid ester in which the remaining group bonding with the (meth)acryloyl group has repeating units), and examples thereof include a functional group-free (meth)acrylic oligomer and a functional group-containing (meth)acrylic oligomer.

The functional group-free (meth)acrylic oligomer is a (meth)acrylic oligomer that does not have a functional group, and examples thereof include alkoxy polyoxyalkylene glycol mono (meth)acrylate. Alkoxy polyoxyethylene glycol mono (meth)acrylate is preferably used. Methoxypolyoxyethylene glycol mono (meth)acrylate is more preferably used.

The functional group-containing (meth)acrylic oligomer is a (meth)acrylic oligomer that has a functional group other than the above-described hydroxyl-group-reactive functional group, and examples thereof include a carboxyl group-containing (meth)acrylic oligomer and a hydroxy group-containing (meth)acrylic oligomer.

Examples of the carboxyl group-containing (meth)acrylic oligomer include ω-carboxy-polycaprolactone mono(meth)acrylate.

Examples of the hydroxy group-containing (meth)acrylic oligomer include polyoxyalkylene glycol mono(meth)acrylate.

As the (meth)acrylic oligomer, a commercial available product may be used. Examples of the functional group-free (meth)acrylic oligomer include BLEMMER AME 400 (manufactured by NOF CORPORATION, methoxypolyethylene glycol-acrylate). Examples of the functional group-containing (meth)acrylic oligomer include Aronix M-5300 (manufactured by TOAGOSEI CO., LTD., ω-carboxy-polycaprolactone (n(degree of polymerization) ≈ 2)monoacrylate).

Among these (meth)acryls, in terms of suppressing the gelatinization, functional group-containing (meth)acryls (i.e., a functional group-containing (meth)acrylic monomer and a functional group-containing (meth)acrylic oligomer) are preferably used, and carboxyl group-containing (meth)acryls (i.e., a carboxyl group-containing (meth)acrylic monomer ((meth)acrylic acid) and a carboxyl group-containing (meth)acrylic oligomer) are more preferably used. In other words, the radically polymerizable monomer preferably has a carboxyl group.

Similarly, in terms of suppressing the gelatinization, a (meth)acrylic oligomer is also preferably used, and a functional group-containing (meth)acrylic oligomer is more preferably used, and a carboxyl group-containing (meth)acrylic oligomer is even more preferably used.

These radically polymerizable monomers may be used alone or in a combination of two or more.

Relative to 100 parts by weight of the β-1,3-glucan derivative, the radically polymerizable monomer is, for example, 0.001 parts by weight or more, preferably 0.01 parts by weight or more, more preferably 0.1 parts by weight or more, even more preferably 1 part by weight or more, most preferably 3 parts by weight or more. When the part by weight of the radically polymerizable monomer relative to 100 parts by weight of the β-1,3-glucan derivative is the above-described lower limit or more, the gelatinization of the pressure-sensitive adhesive composition can further be suppressed.

Relative to 100 parts by weight of the β-1,3-glucan derivative, the radically polymerizable monomer is, for example, 100 parts by weight or less, preferably 10 parts by weight or less, more preferably 7 parts by weight or less. When the part by weight of the radically polymerizable monomer relative to 100 parts by weight of the β-1,3-glucan derivative is the above-described upper limit or less, the pressure-sensitive adhesive composition can exhibit an excellent holding force.

Relative to 100 parts by weight of the functional group-containing acryl compound, the radically polymerizable monomer is, for example, 0.25 parts by weight or more, preferably 2.5 parts by weight or more, more preferably 25 parts by weight or more, even more preferably 50 parts by weight or more, particularly preferably 100 parts by weight or more. When the part by weight of the radically polymerizable monomer relative to 100 parts by weight of the functional group-containing acryl compound is the above-described lower limit or more, the gelatinization of the pressure-sensitive adhesive composition can further be suppressed.

Relative to 100 parts by weight of the functional group-containing acryl compound, the radically polymerizable monomer is, for example, 2500 parts by weight or less, preferably 250 parts by weight or less, more preferably 200 parts by weight or less, even more preferably 150 parts by weight or less. When the part by weight of the radically polymerizable monomer relative to 100 parts by weight of the functional group-containing acryl compound is the above-described upper limit or less, the pressure-sensitive adhesive composition can exhibit an excellent holding force.

In the preparation of the above-described pressure-sensitive composition, the radically polymerizable monomer is mixed together with the β-1,3-glucan derivative, the functional group-containing acryl compound, and the photo-radical generator in the above-described blending ratio.

### [Additive]

The pressure-sensitive adhesive composition may contain an additive in an appropriate ratio in a range that does not inhibit the effects of the present application. Examples of the additive include another base polymer (acrylic resin), a cross-linkage agent (isocyanate-based, oxazoline-based, carbodiimide-based, or epoxy-based), a tackifier, a viscosity modifier, a leveling agent, a plasticizer, a filler, a stabilizer, a preservative, a cross-linkage accelerator, and an anti-aging agent.

### [Pressure-sensitive Adhesive Tape]

The pressure-sensitive adhesive tape of the present invention includes, for example, a pressure-sensitive adhesive film and a pressure-sensitive adhesive sheet, and denotes a double-sided pressure-sensitive adhesive tape (a pressure-sensitive adhesive layer alone, substrate-less) without a substrate sheet, and a pressure-sensitive adhesive tape including a substrate sheet or a double-sided pressure-sensitive adhesive tape including a substrate sheet. The pressure-sensitive adhesive tape of the present invention preferably includes a pressure-sensitive adhesive layer consisting of the pressure-sensitive adhesive composition of the present invention on at least one side of the substrate sheet.

Examples of the material of the substrate sheet include resin. Examples of the resin include polyester. The substrate sheet has a thickness of 0.5 µm or more, and, for example, 900 µm or less.

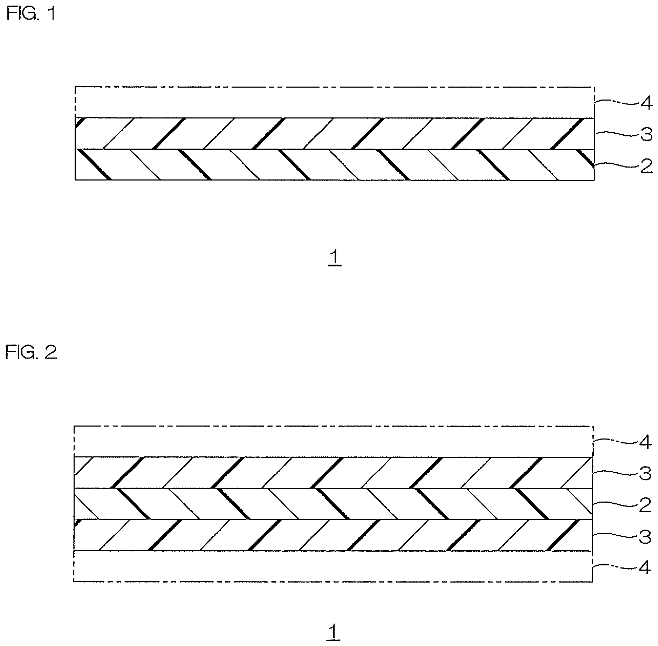

To form the pressure-sensitive adhesive layer, first, in the preparation of the above-described pressure-sensitive adhesive composition, a solvent is mixed as necessary to prepare a solution of the pressure-sensitive adhesive composition. As the solvent, a known organic solvent may be used. Thereafter, by heating, the β-1,3-glucan derivative and functional group-containing acryl compound in the pressure-sensitive adhesive composition are allowed to entirely or partially react with each other. The conditions for the heating are not especially limited as long as the entire or partial reaction of the β-1,3-glucan derivative with the functional group-containing acryl compound is carried out. Thereafter, the pressure-sensitive adhesive composition or the solution thereof is, as illustrated in FIG. 1, applied to a substrate sheet 2, and as necessary dried and subjected to light irradiation. The conditions for the light irradiation are not especially limited as long as the reaction product in the pressure-sensitive adhesive composition is enabled to cross-link. In this manner, a pressure-sensitive adhesive layer 3 can be formed.

Alternatively, the pressure-sensitive adhesive composition or the solution thereof is applied to the substrate sheet 2 and dried without allowing the components to react with each other. During the drying, the β-1,3-glucan derivative and functional group-containing acryl compound in the pressure-sensitive adhesive composition are allowed to partially or entirely react with each other. Thereafter, light irradiation is carried out. Also in this manner, a pressure-sensitive adhesive layer 3 can be formed.

More specifically, for example, first, a β-1,3-glucan derivative is dissolved in the solvent to prepare a solution. The concentration of the solid content in the solution is, for example, 1% by weight or more and 30% by weight or less.

Thereafter, the functional group-containing acryl compound is blended into the solution and heated. The heating temperature is, for example, 30°C or more, 90°C or less, preferably 70°C or less. The heating time is, for example, 30 minutes or more, 10 hours or less, preferably 5 hours or less. In this manner, a reaction product of the β-1,3-glucan derivative and the functional group-containing acryl compound is generated. Then, a photo-radical generator and, as necessary, a radically polymerizable monomer and an additive is(are) blended into the solution containing the reaction product to prepare a solution of the pressure-sensitive adhesive composition.

Then, the solution of the pressure-sensitive adhesive composition is applied to the substrate sheet 2 as illustrated in FIG. 1 and, as necessary, dried and subjected to light irradiation. The drying temperature is, for example, 30°C or more and 150°C or less. The drying time is, for example, 1 minute or more and 1 hour or less. The light irradiation is preferably UV light irradiation, and the amount of irradiation light is appropriately set depending on the area or thickness of the pressure-sensitive adhesive layer.

Alternatively, the solution of the pressure-sensitive adhesive composition may be applied to the substrate sheet 2 and dried at a relatively low temperature (for example, 60°C or less), and subjected to light irradiation, and dried again at a relatively high temperature (for example, 100°C or more).

In this manner, a pressure-sensitive adhesive layer 3 can be formed.

As described above, a pressure-sensitive adhesive tape 1 including a substrate sheet 2 and a pressure-sensitive adhesive layer 3 is produced.

The pressure-sensitive adhesive layer 3 has a thickness of, for example, 1 µm or more, and, for example, 1000 µm or less. The thickness of the pressure-sensitive adhesive tape 1 is, for example, 2 µm or more, and, for example, 1100 µm or less.

Further, as illustrated in FIG. 2, the pressure-sensitive adhesive tape 1 may include a substrate sheet 2 and a pressure-sensitive adhesive layer 3 disposed on both of the front and back surfaces of the substrate sheet 2.

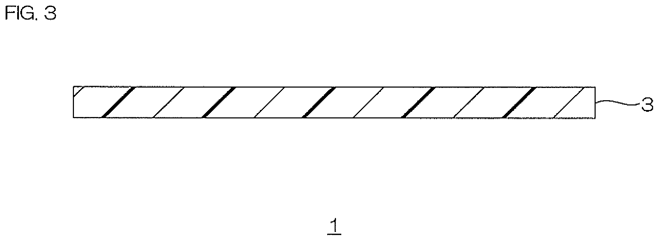

Alternatively, as illustrated in FIG. 3, a substrate-less pressure-sensitive adhesive tape 1 that only includes a pressure-sensitive adhesive layer 3 can be produced without using a substrate sheet 2. The pressure-sensitive adhesive tape 1 consists of only a pressure-sensitive adhesive layer 3.

As shown with the phantom lines of FIGS. 1 and 2, the pressure-sensitive adhesive tape 1 may further include a release sheet 4 disposed on the front surface of the pressure-sensitive adhesive layer 3.

### [Effects of Pressure-sensitive Adhesive Composition and Pressure-sensitive Adhesive Tape]

In the pressure-sensitive adhesive composition of the present invention, the β-1,3-glucan derivative and the functional group-containing acryl compound are allowed to react with each other by heat. More specifically, in the pressure-sensitive adhesive composition of the present invention, first, the hydroxyl-group-reactive functional group is easily thermally reacted with the hydroxyl group corresponding to the above-described degree of substitution of the acyl group, thereby generating a reaction product having a (meth)acryloyl group.

On the other hand, the thermal reaction of the (meth)acryloyl group of the reaction product is suppressed while the cross-linkage of the (meth)acryloyl group of the reaction product is caused by light. Thus, even when the pressure-sensitive adhesive composition of the present invention is heated, the gelatinization is suppressed. As a result, until light irradiation is carried out, the pressure-sensitive adhesive composition can be applied to a substrate sheet, and excellent handleability and storage stability are maintained for a long period of time.

Further, subjecting the pressure-sensitive adhesive composition of the present invention to light irradiation at an arbitrary time enables the (meth)acryloyl group of the reaction product to cross-link. This can increase the adhesion, and achieve an excellent holding force under high-temperature atmosphere.

Furthermore, when the pressure-sensitive adhesive composition of the present invention further contains a radically polymerizable monomer, the gelatinization can further be suppressed.

In particular, when the radically polymerizable monomer has a carboxyl group in the pressure-sensitive adhesive composition of the present invention, the gelatinization can further be suppressed.

### Examples

Hereinafter, with reference to Synthesis Examples, Examples, Comparative Examples, and Reference Example, the present invention is more specifically described. The present invention is not limited to Synthesis Examples, Examples, Comparative Examples, and Reference Example in any way. The specific numeral values used in the description below, such as mixing ratios (contents), physical property values, and parameters can be replaced with the corresponding mixing ratios (contents), physical property values, and parameters in the above-described "DESCRIPTION OF EMBODIMENTS", including the upper limit values (numeral values defined with "or less", and "less than") or the lower limit values (numeral values defined with "or more", and "more than"). The "parts" and "%" are based on weight unless otherwise specified.

### <Examples of Myristoylated β-1,3-glucan (R in RCO having carbon atoms of 13)>

### [Synthesis of β-1,3-glucan Derivative and Measurement of Degree of Substitution (DS) of Acyl Group]

### Synthesis Example 1

### [Synthesis of Myristoylated β-1,3-glucan (R in RCO having carbon atoms of 13) Having Degree of Substitution of Acyl Group of 2.9 and Degree of Substitution of Myristoyl]

A reaction vessel equipped with a condenser tube, a nitrogen introduction tube, a thermometer, and a stirrer was charged with 13.3 g of a β-1,3-glucan (manufactured by Euglena Co., Ltd.: 82.03 mmol of glucose parts) and 1000 mL of dehydrated pyridine (manufactured by FUJIFILM Wako Pure Chemical Corporation), and the mixture was stirred at a temperature of 60°C under nitrogen atmosphere for 0.5 hours. 133.05 mL of Myristoylchloride (492.2 mmol: manufactured by FUJIFILM Wako Pure Chemical Corporation) was added to the pyridine solution and thereafter the mixture was heated to 60°C, and stirred for 1 hour. In this manner, a reaction mixture solution was prepared.

Thereafter, a solid intermediate product was produced from the reaction mixture solution. First, 1 hour after the beginning of the reaction, 2000 mL of methanol was added to the reaction mixture solution and the mixture was cooled to a room temperature. Next, the generated solid product was taken out and dissolved into 600 mL of toluene, thereby preparing a toluene solution. The toluene solution was poured into 2000 mL of methanol that was being stirred, thereby yielding a solid product. The solid product was washed by repeating dissolving the solid product into toluene and pouring the dissolved solution into methanol three times, thereby yielding a solid product. The solid product was dried under reduced pressure at 60°C for 4 hours.

In this manner, a myristoylated β-1,3-glucan was produced. In other words, the myristoylated β-1,3-glucan is a β-1,3-glucan derivative obtained by introducing myristoyl into a β-1,3-glucan.

Further, the degree of substitution of the myristoyl group in the myristoylated β-1,3-glucan was determined with ¹H-NMR. In the ¹H-NMR, the signal of the hydrogen atom forming the hydroxyl group in the glucose units and the signal of the hydrogen atom forming myristoyl (C₁₃H₂₇CO) were separately detected. Based on the value of integral of each of the two signals, the degree of substitution of the myristoyl group (the acyl group) was determined. As a result, the degree of substitution (DS) was 2.9.

The degree of substitution (DS) of the acyl group in the β-1,3-glucan derivative in each Synthesis Example below was determined in the same manner as described above.

### Synthesis Example 2

### [Synthesis of Myristoylated β-1,3-glucan (R in RCO having carbon atoms of 13) Having Degree of Substitution of Acyl Group of 2.8]

A myristoylated β-1,3-glucan was produced by the same process as in Synthesis Example 1. However, the blending amount of myristoyl chloride was changed from 133.05 mL (492.2 mmol) to 110.87 mL (410.1 mmol). The degree of substitution of the myristoyl group by ¹H-NMR was 2.8.

### Synthesis Example 3

### [Synthesis of Myristoylated β-1,3-glucan (R in RCO having carbon atoms of 13) Having Degree Substitution of Acyl Group of 2.7]

A myristoylated β-1,3-glucan was produced by the same process as in Synthesis Example 1. However, the blending amount of myristoyl chloride was changed from 133.05 mL (492.2 mmol) to 88.7 mL (328.1 mmol). The degree of substitution of the myristoyl group by ¹H-NMR was 2.7.

### Comparative Synthesis Example 1

### [Synthesis of Myristoylated β-1,3-glucan (R in RCO having carbon atoms of 13) Having Degree of Substitution of Acyl Group of 3.0]

A myristoylated β-1,3-glucan was produced by the same process as in Synthesis Example 1. However, the temperature at the reaction was changed from 60°C to 92°C. The degree of substitution of the myristoyl group by ¹H-NMR was 3.0.

### Comparative Synthesis Example 2

### [Synthesis of Myristoylated β-1,3-glucan (R in RCO having carbon atoms of 13) Having Degree of Substitution of Acyl Group of 2.5]

A myristoylated β-1,3-glucan was produced by the same process as in Synthesis Example 1. However, the blending amount of myristoyl chloride was changed from 133.05 mL (492.2 mmol) to 66.52 mL (246.1 mmol). The degree of substitution of the myristoyl group by ¹H-NMR was 2.5.

### [Production of Pressure-sensitive Adhesive Tape]

### [Example 1]

The myristoylated β-1,3-glucan of Synthesis Example 1 was dissolved into toluene, thereby preparing a toluene solution of the concentration of the solid content of 10% by weight.

Karenz AOI (manufactured by Showa Denko K. K., 2-acryloyloxyethylisocyanate) as a functional group-containing acryl compound was blended into the prepared toluene solution. Relative to 100 parts by weight of the solid content (myristoylated β-1,3-glucan) of the toluene solution, the blending amount of Karenz AOI was 3.7 parts by weight (NCO group in Karenz AOI/OH group in the β-1,3-glucan derivative = 2). The mixture was heated at 60°C for 3 hours, and cooled to a room temperature. Thereafter, 0.1 parts by weight of Omnirad 651 (manufactured by IGM Resins B.V., intramolecular cleavage type, benzil ketal) was added as a UV radical generator. In this manner, a toluene solution of the pressure-sensitive adhesive composition was produced.

To a front surface of a polyester substrate (manufactured by TORAY INDUSTRIES, INC.: Lumirror S-10, a thickness of 25 µm) as a substrate sheet, the toluene solution of the pressure-sensitive adhesive composition was applied using an applicator (manufactured by TESTER SANGYO CO,. LTD.), heated at 50°C for 5 minutes, and subjected to UV irradiation (3.0 mW/cm², 900 mJ/cm²), and thereafter further heated at 120°C for 5 minutes to dry the toluene solution.

In this manner, a pressure-sensitive adhesive tape including the substrate sheet and a pressure-sensitive adhesive layer having a thickness of 50 µm was produced.

### [Example 2]

Except that the myristoylated β-1,3-glucan of Synthesis Example 2 was used and the blending amount of Karenz AOI was changed from 3.7 parts by weight to 7.5 parts by weight (NCO group in Karenz AOI/OH group in the β-1,3-glucan derivative = 2), Example 2 was carried out in the same manner as Example 1.

### [Example 3]

Except that the myristoylated β-1,3-glucan of Synthesis Example 3 was used and the blending amount of Karenz AOI was changed from 3.7 parts by weight to 11.6 parts by weight (NCO group in Karenz AOI/OH group in the β-1,3-glucan derivative = 2), Example 3 was carried out in the same manner as Example 1.

### [Example 4]

The myristoylated β-1,3-glucan of Synthesis Example 1 was dissolved into toluene, thereby preparing a toluene solution of the concentration of the solid content of 10% by weight. Karenz AOI (manufactured by Showa Denko K. K., 2-acryloyloxyethylisocyanate) was blended as a functional group-containing acryl compound to the prepared toluene solution. The blending amount of Karenz AOI relative to 100 parts by weight of the solid content (myristoylated β-1,3-glucan) of the toluene solution was 3.7 parts by weight. The mixture was heated at 60°C for 3 hours, and cooled to a room temperature. Thereafter, 5.0 parts by weight of Aronix M-5300 (manufactured by TOAGOSEI CO., LTD., ω-carboxy-polycaprolactone (n(degree of polymerization) ≈ 2)monoacrylate) was added thereto. Then, 0.1 parts by weight of Omnirad 651 (manufactured by IGM Resins B.V.) was added as a UV radical generator. In this manner, a toluene solution of the pressure-sensitive adhesive composition was produced.

Thereafter, a pressure-sensitive adhesive tape was produced in the manner as in Example 1.

### [Example 5]

Except that Aronix M-5300 was changed to 4-HBA (manufactured by OSAKA ORGANIC CHEMICAL INDUSTRY LTD., 4-hydroxybutylacrylate), Example 5 was carried out in the same manner as Example 4.

### [Example 6]

Except that Aronix M-5300 was changed to BLEMMER AME 400 (manufactured by NOF CORPORATION, methoxypolyethylene glycol-acrylate), Example 6 was carried out in the same manner as Example 4.

### [Example 7]

Except that the blending amount of Aronix M-5300 was changed from 5 parts by weight to 0.01 parts by weight, Example 7 was carried out in the same manner as Example 4.

### [Example 8]

Except that the blending amount of Aronix M-5300 was changed from 5 parts by weight to 0.1 parts by weight, Example 8 was carried out in the same manner as Example 4.

### [Example 9]

Except that the blending amount of Aronix M-5300 was changed from 5 parts by weight to 1.0 part by weight, Example 9 was carried out in the same manner as Example 4.

### [Example 10]

Except that the blending amount of Aronix M-5300 was changed from 5 parts by weight to 10 parts by weight, Example 10 was carried out in the same manner as Example 4.

### [Example 11]

Except that the blending amount of Aronix M-5300 was changed from 5 parts by weight to 100 parts by weight, Example 11 was carried out in the same manner as Example 4.

### [Comparative Example 1]

Except that the myristoylated β-1,3-glucan of Comparative Synthesis Example 1 was used and Karenz AOI was not blended, Comparative Example 1 was carried out in the same manner as Example 1.

### [Comparative Example 2]

Except that the myristoylated β-1,3-glucan of Comparative Synthesis Example 2 was used and the blending amount of Karenz AOI was changed from 4 parts by weight to 20.5 parts by weight (NCO group in Karenz AOI/OH group in the β-1,3-glucan derivative = 2), Comparative Example 2 was carried out in the same manner as Example 1.

### [Comparative Example 3]

Except that the UV radical generator Omnirad 651 (manufactured by IGM Resins B.V.) was not blended, Comparative Example 3 was carried out in the same manner as Example 1.

### [Reference Example]

The myristoylated β-1,3-glucan of Synthesis Example 1 was dissolved into toluene, thereby preparing a toluene solution of the concentration of the solid content of 10% by weight.

CORONATE L (manufactured by TOSOH CORPORATION, a trimethylol propane adduct of tolylenediisocyanate) was blended as an isocyanate-based cross-linkage agent to the prepared toluene solution. The blending amount of CORONATE L relative to 100 parts by weight of the solid content (myristoylated β-1,3-glucan) of toluene solution was 1.0 part by weight. In this manner, a toluene solution of the pressure-sensitive adhesive composition was produced.

### <Example of Octanoylated β-1,3-glucan (R in RCO having carbon atoms of 7)>

### Synthesis Example

### [Example of Octanoylated β-1,3-glucan (R in RCO having carbon atoms of 7) Having Degree of Substitution of Acyl Group of 2.9]

Octanoylated β-1,3-glucan was produced by the same process as in Synthesis Example 1. However, myristoylchloride was changed to octanoylchloride, and the blending amount of the octanoylchloride was changed from 133.05 mL (492.2 mmol) to 84.0 mL (492.2 mmol). The degree of substitution of the myristoyl group by ¹H-NMR was 2.9.

### [Example]

Except that the octanoylated β-1,3-glucan of Synthesis Example was used and the blending amount of Karenz AOI was changed from 3.7 parts by weight to 5.3 parts by weight (NCO group in Karenz AOI/OH group in the β-1,3-glucan derivative = 2), this Example was carried out in the same manner as Example 1.

### <Evaluation Method>

The results of the evaluations below are shown together with the formulations of Examples, Comparative Examples, and Reference Example in Tables 2 to 4.

### [Holding Force]

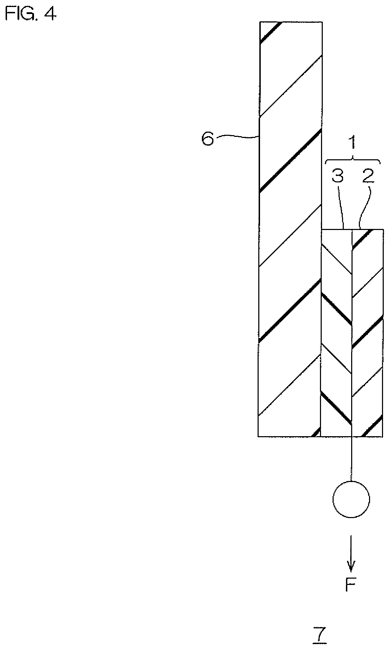

A width 10 mm × length 100 mm piece was cut from the pressure-sensitive adhesive tape of each of Examples, Comparative Examples, and Reference Example. A pressure-sensitive adhesive surface of the cut piece was bonded to an adherend made of a bakelite plate by pressure bonding operation of reciprocating a 2Kg roller once so that the pressure-sensitive adhesive area became width 10 mm × length 20 mm, thereby producing an adherend sample 7 as illustrated in FIG. 4. The adherend sample 7 was left to stand in 23°C atmosphere for 30 minutes, and thereafter further left to stand in 80°C atmosphere for 30 minutes. Subsequently, a load of 0.5 kg was applied to a lower end portion of the pressure-sensitive adhesive tape 1. In the state, the pressure-sensitive adhesive tape 1 was left to stand in 80°C atmosphere for 1 hour (60 minutes). Thereafter, the length (mm) of the slide of the pressure-sensitive adhesive tape 1 relative to the adherend 6 was measured, and the measured length was obtained as a "holding force". In the case that the pressure-sensitive adhesive tape 1 fell off during the test, the time (minute) when the tape fell off was specified. Further, in the case that the pressure-sensitive adhesive tape 1 fell off, the release mode was noted in parenthesis.

### [Pot Life at High Temperature]

The toluene solution of the pressure-sensitive adhesive composition of each of Examples, Comparative Examples, and Reference Example was heated at 60°C for 3 hours. Then, it was visually checked whether the toluene solution flew or not. The case in which the toluene solution flew and was applicable was evaluated as "Good". The case in which the toluene solution did not flow and was difficult to apply was evaluated as "Bad".

### [Presence or Absence of Gel]

The toluene solution used for the above-described evaluation of pot life at a high temperature was further stirred at 8000 rpm for 5 minutes, and the appearance of the toluene solution was evaluated. The visual check of the size of the gel was used as the criterion, and determined according to Table 1 below.

### [Table 1]

**Table 1**

| Evaluation of gelatinization | Evaluation criteria |
|---|---|
| Bad | A more than 5 mm gel was present |
| Fair | A 1 to 5 mm gel was present |
| Good | A less than 1 mm gel was present |
| Excellent | No gel was present |

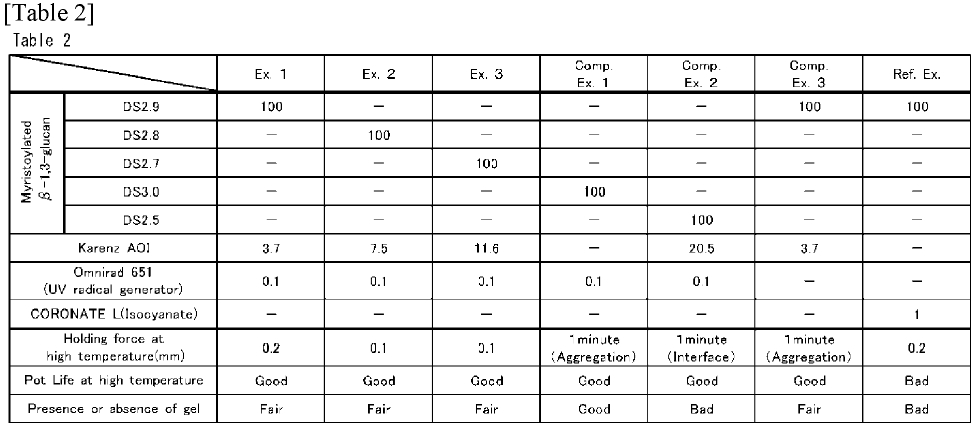

### [Table 3]

**Table 3**

| | Ex. 1 | Ex. 4 | Ex 5 | Ex. 6 | Ex 7 | Ex. 8 | Ex 9 | Ex. 10 | Ex. 11 |
|---|---|---|---|---|---|---|---|---|---|
| DS2.9 | 100 | 100 | 100 | 100 | 100 | 100 | 100 | 100 | 100 |
| Karenz AOI | 3.7 | 3.7 | 3.7 | 3.7 | 3.7 | 3.7 | 37 | 3.7 | 3.7 |
| Omnirad 651 (UV radical generator) | 0.1 | 0.1 | 0.1 | 0.1 | 0.1 | 0.1 | 0.1 | 0.1 | 0.1 |
| M-5300 (COOH) | - | 5 | - | - | 0.01 | 0.1 | 1 | 10 | 100 |
| 4-HBA (Hydroxyl group) | - | - | 5 | - | - | - | - | - | - |
| AME-400(PEG) | - | - | - | 5 | - | - | - | - | - |
| Holding force at high temperature(mm) | 02 | 0.2 | 0.2 | 0.3 | 0.2 | 0.2 | 02 | 0.2 | 0.3 |
| Pot Life at high temperature | Good | Good | Good | Good | Good | Good | Good | Good | Good |
| Presence or absence of gel | Fair | Excellent | Good | Good | Good | Excellent | Excellent | Excellent | Excellent |

### [Table 4]

**Table 4**

| | Ex. 12 |
|---|---|
| Octanoylated *β* -1,3-glucan | 100 |
| Karenz AOI | 5.3 |
| Omnirad651 (UV radical generate) | 0.1 |
| Holding force at high temperature(mm) | 0.2 |
| Pot Life at high temperature | Good |
| Presence or absence of gel | Fair |

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The pressure-sensitive adhesive composition of the present invention is used, for example, for a pressure-sensitive adhesive tape.

### Description of Reference Numerals

- 1: pressure-sensitive adhesive tape
- 2: substrate sheet
- 3: pressure-sensitive adhesive layer

## Claims

1. A pressure-sensitive adhesive composition comprising:
a β-1,3-glucan derivative obtained by introducing an acyl group into a β-1,3-glucan, the β-1,3-glucan derivative having a degree of substitution of the acyl group of 2.6 or more and less than 3.0, and a compound having both of a (meth)acryloyl group and a hydroxyl-group-reactive functional group, and/or
a reaction product of the β-1,3-glucan derivative and the compound having both of a (meth)acryloyl group and a hydroxyl-group-reactive functional group; and
a photo-radical generator.

2. The pressure-sensitive adhesive composition according to claim 1, wherein the hydroxyl-group-reactive functional group of the compound is an isocyanate group.

3. The pressure-sensitive adhesive composition according to claim 1, further comprising:
a radically polymerizable monomer.

4. The pressure-sensitive adhesive composition according to claim 3, wherein the radically polymerizable monomer has a carboxyl group.

5. A pressure-sensitive adhesive tape comprising:
a pressure-sensitive adhesive layer made of the pressure-sensitive adhesive composition according to claim 1.
